# EUROPEAN PATENT SPECIFICATION

(11) **EP 2 938 178 B1**
(45) Date of publication and mention of the grant of the patent: **16.03.2022**
(21) Application number: 13824288.8
(22) Date of filing: 19.12.2013
(51) Int. Cl.: A01B 15/04, A01B 15/18

(54) **WORKING TOOL FOR AGRICULTURAL MACHINES**
ARBEITSVORRICHTUNG FÜR LANDWIRTSCHAFTLICHE MASCHINEN
ACCESSOIRE DE TRAVAIL POUR MACHINES AGRICOLES

(30) Priority: 25.12.2012 CZ 20120958
(43) Date of publication of application: 04.11.2015
(73) Proprietor: Farmet A.S., 55203 Ceská Skalice (CZ)
(72) Inventor: NYC, Michal, 54941 Cervený Kostelec (CZ); GAVLAS, Dusan, 55203 Ceska Skalice (CZ); VÁLEK, Stepán, 54901 Nové Mesto nad Metuji (CZ)
(74) Representative: Skoda, Milan
(86) International application number: PCT/CZ2013/000170
(87) International publication number: WO 2014/101907

(56) References cited:
- EP-A1- 0 923 851
- EP-A1- 2 591 648
- DE-A1-102008 056 770
- FR-A1- 2 617 669
- US-A- 4 711 187

## Description

### Technical Field

The invention relates to a soil working tool for an agricultural machine with a wear guard against over-wear in the form of at least one wear-resistant plate.

### State of the Art

Currently, numerous solutions for protecting the soil working tools of agricultural machines against over-wear are known. The soil working tools moving in soil are subjected to large shocks and wear, which causes their short lifespan. Replacement is performed whenever there is an unacceptable level of weakening of the supporting material, thereby deforming and loosening the optimum working geometry of the soil working tool, possibly up to the point of total abrasion.

The basic form of protection against wear and tear of soil working tools is by increasing the hardness of the base material of the whole tool or treating the working tool, most commonly by tempering. This protection is insufficient and also relatively expensive.

Another option is by protecting the most exposed parts of the soil working tool with wear resistant, most commonly tungsten carbide, brazed-mounted plates. Wear resistant plates are mounted on the soil working tool of agricultural machines which are most exposed to abrasion by the soil. Such solutions are known for example from International patent applications WO 2012007470 and WO 2010149464. This method has drawbacks in the complexity of the brazing process and the difficulty of using more geometrically complex plates. A main disadvantage is that surrounding areas of the machine not covered by the plate are heated during brazing as well, thereby reducing the hardness of the tempered material. The result is a greater susceptibility to wear in the area behind the plate and thus reduced the lifespan of the whole machine. A major disadvantage of this solution is the high cost of the welding and of the welding materials.

Other means of protection against wear and tear of soil working tools is by welding Tungsten steel onto the exposed area. The disadvantage is that the preform soil working tool is heated -thereby reducing the hardness of the base material, which has the afore mentioned effect of causing greater susceptibility to wear of the supporting parts and reduced service lifespan of the soil working tool. Again, the big disadvantage is the high cost of the complete welding-on process.

These disadvantages have a technical solution know from the patent application EP 0923851. There is shown a tine used in a cultivator. It has a pointed outline and is set at the leading edge of the cultivator to break the soil prior to working, e.g. to prepare a seed bed. The leading edges of the tine are made of hardened metal while the top of the tine profile is fitted with ceramic plates to reduce abrasion damage from the soil as it lifts over the tine. The plates have chamfered edges, which can be rounded to reduce abrasion wear, and are set into recesses in the tine using adhesive. Rectangular or rounded ceramic plates can be used.

Document US 4711187 shows a fertilizer knife with protection against abrasion in the form of durable plates. This document shows a different shape of the knife. The front edge can be covered by brazed abrasion-resistant plates. The disadvantages are the same.

The above mentioned state-of-the-art shows a number of disadvantages of the current state of technology, while the most significant of them appears to be the lowering of resistance of the whole of the soil working tool and the high price of known production technologies.

The aim of the invention is to design soil working tool for agricultural machines which will be more wear resistant and less expensive to manufacture than existing solutions.

### Principle of the Invention

The mentioned deficiencies are to a large part removed and the objectives of the invention fulfilled by a soil working tool for an agricultural machine with a wear guard against over-wear in the form of at least two wear resistant plates according to the invention which is characterized in that at least one wear-resistant plate is shaped and adapted to be mounted in such a way that its profile, in the direction of movement of the soil working tool, covers, while in contact with the soil, the front edge of the next arranged abrasion-resistant plate said next arranged wear resistant plate being attached by a layer of adhesive, and the first wear-resistant plate arranged on top of the soil working tool is fastened by brazing.

As a variant, the mentioned deficiencies are to a large part removed and the objectives of the invention fulfilled by a soil working tool for an agricultural machine with a wear guard against over-wear in the form of at least two wear resistant plates according to the invention which is characterized in that at least one wear-resistant plate is shaped and adapted to be mounted in such a way that its profile, in the direction of movement of the soil working tool, extend over, while in contact with the soil, the front edge of the next arranged wear-resistant plate said next arranged wear resistant plate being attached by a layer of adhesive, and the first wear-resistant plate arranged on top of the soil working tool is fastened by brazing.

The two solutions mentioned above reduce strain to the next wear-resistant plate arranged in a row, thus increasing the firmness of the attachment of additional plates and their resistance to detachment during operation, thereby increasing the overall lifespan of the soil working tool. The advantage of using the adhesive is then, that there is no heating of the body of the working tool and thus its mechanical properties are not changed.

The solution proposed by the invention according to claims 1 and 2 is advantageous because the first wear-resistant plate receives the most strain and its mounting brazing is stronger and more stable. The outcome is also the fact that in this case there is minimal distortion of the mechanical properties of the body of the soil working tool by heating during brazing. The advantage of this solution is higher firmness of the mounting of the first plate which, during operation, is most exposed to abrasion and impacts from stones.

It is also advantageous when the last wear resistant plate is shaped and mounted in such a way that its profile in the direction of movement of the soil working tool when in contact with the soil, covers or overlaps a bolt, by which the soil working tool is attached to the agricultural machine. This reduces strain on the connection of the soil working tool to the agricultural machine.

It is also advantageous if the wear resistant plate is square or rectangular or trapezoidal or arrow or half-moon shaped.

The soil working tool is preferably a made of steel plate and the wear resistant material is of sintered carbide, ceramic material or tool-grade steel.

The main advantage of the structural design of a soil working tool for an agricultural machine according to the invention is the elimination of thermal stress to the body of the working tool during the process of attaching wear resistant plates. This is when the wear resistant plates have already been tempered before attachment because then the brazing process reduces the strength and hardness of the body. The elimination of these adverse effects allows for the use of a less sturdily dimensioned supporting body while maintaining high strength and toughness during use. This in turn reduces the material and manufacturing costs of the supporting body and the total cost of the complete soil tool. Other advantages of using an adhesive are the lower cost of bonding and also the option of using wear-resistant plates which are made of nonmetallic materials.

The structural design of the soil working tool for an agricultural machine, according to the invention, thus reduces material costs and production cost, and increases the lifespan of the soil working tools for agricultural machines.

### Overview of the Figures

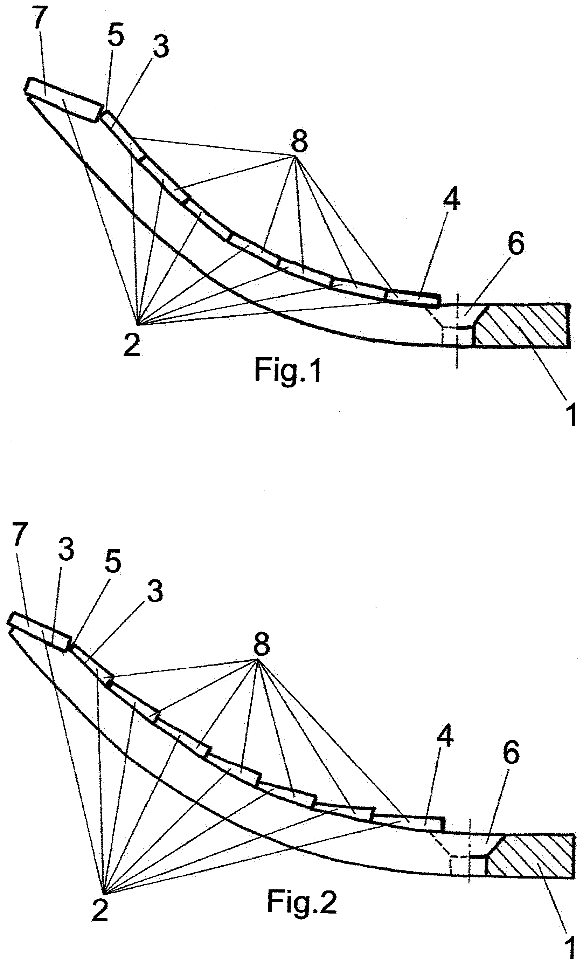

The invention will be further elucidated using drawings, in which Fig. 1 shows the soil working tool, in which each wear-resistant plate covers the front edge of the next in line arranged wear-resistant plate, while the first wear-resistant plate is fastened by brazing and the other wear-resistant plates are fastened by adhesion. Fig. 2 shows the soil working tool, in which each wear-resistant plate extend over the front edge of the next in line arranged wear-resistant plate, while the first wear-resistant plate is fastened by brazing and the other wear-resistant plates are fastened by adhesion.

### Examples of the Performance of the Invention

### Example 1

The soil working tool 1 for an agricultural machine (Fig. 1) with wear resistance in the form of wear resistant plates 2.

The first wear-resistant plate 2,7 arranged at the tip of the soil working tool 1 is mounted by brazing, while the other row arranged wear- resistant plates 2,8 are attached by a layer of adhesive 3 .

The first wear-resistant plate 2,7 arranged at the tip of the soil working tool 1 is purpously shaped and mounted so that its profile in the direction of the movement of the soil working tool 1, covers, when in contact with the soil, the leading edge 5 of the next in a row arranged wear resistant plate 2,8, wherein each additional wear-resistant plate 2 is purpously shaped and mounted so that its profile in the direction of the movement of the soil working tool 1, covers, when in contact with the soil, the leading edge 5 of the next in a row arranged wear resistant plate 2,8.

The last wear-resistant plate 2,4 is purpously shaped and mounted so that its profile in the direction of the movement of the soil working tool 1, covers , when in contact with the soil, a bolt 6, by which the soil working tool 1 is attached to the agricultural machine.

The wear-resistant plate 2 is square or rectangular or trapezoidal or arrow or half-moon shaped, and the wear resistant material is of sintered carbide, ceramic material or tool-grade steel, or any other wear-resistant material.

The soil working tool 1 is made of steel.

### Example 2

The soil working tool 1 for an agricultural machine (Fig. 2) with a wear resistance in the form of wear-resistant plates 2.

All wear-resistant plates 2 are attached to the soil working tool 1 by a layer of adhesive 3.

The first wear- resistant plate 2,7 arranged at the tip of the soil working tool 1 is purpously shaped and mounted so that its profile in the direction of the movement of the soil working tool 1, extend over, when in contact with the soil, the leading edge 5 of the next in a row arranged wear resistant plate 2,8, wherein each additional wear-resistant plate 2 is purpously shaped and mounted so that its profile in the direction of the movement of the soil working tool 1, overlaps, when in contact with the soil, the leading edge 5 of the next in a row arranged wear resistant plate 2,8, wherein each additional wear-resistant plate 2 is purpously shaped and mounted so that its profile in the direction of the movement of the soil working tool 1, overlaps, when in contact with the soil, the leading edge 5 of the next in a row arranged wear resistant plate 2,8.

The last wear-resistant plate 2,4 is purpously shaped and mounted so that its profile in the direction of the movement of the soil working tool 1, overlaps, when in contact with the soil, a bolt 6, by which the soil working tool 1 is is attached to the agricultural machine.

The wear-resistant plate 2 is square or rectangular or trapezoidal or arrow or half-moon shaped, and the wear resistant material is of sintered carbide, ceramic material or tool-grade steel, or any other wear-resistant material.

The soil working tool 1 is made of steel.

### Industrial Application

The soil working tool for an agricultural machine according to the invention can be used as a soil working tool for an agricultural machine with increased protection against wear.

### List of Reference Marks

- 1: soil working tool
- 2: wear- resistant plate I
- 3: layer of adhesive
- 4: wear- resistant plate II
- 5: front edge
- 6: bolt
- 7: wear-resistant plate III
- 8: wear-resistant plate IV

## Claims

1. A soil working tool for an agricultural machine with a wear guard against over-wear in the form of at least two wear-resistant plates (2) wherein at least one wear-resistant plate (2) is shaped and adapted to be mounted in such a way that its profile, in the direction of movement of the soil working tool (1), covers, while in contact with the soil, the front edge (5) of the next arranged wear-resistant plate (2,8), **characterised in that** said next arranged wear resistant plate (2,8) is attached by a layer of adhesive, and the first wear-resistant plate (2,7) arranged on top of the soil working tool (1) is fastened by brazing.

2. A soil working tool for an agricultural machine with a wear guard against over-wear in the form of at least two wear-resistant plates (2) wherein at least one wear-resistant plate (2) is shaped and adapted to be mounted in such a way that its profile, in the direction of movement of the soil working tool (1), extends over, while in contact with the soil, the front edge (5) of the next arranged wear-resistant plate (2,8), **characterised in that** said next arranged wear resistant plate (2,8) is attached by a layer of adhesive, and the first wear-resistant plate (2,7) arranged on top of the soil working tool (1) is fastened by brazing.

3. The soil working tool for an agricultural machine, according to any of the preceding claims further **characterised in that** the last wear-resistant plate (2,4) is shaped and adapted to be mounted in such a way that its profile, in the direction of movement of the soil working tool (1), covers, while in contact with the soil, a bolt (6), by which the soil working tool (1) is attached to the agricultural machine.

4. The soil working tool for an agricultural machine, according to any of the preceding claims further **characterised in that** the wear-resistant plate (2) is square or rectangular or trapezoidal or arrow or half- moon shaped.

5. The soil working tool for an agricultural machine, according to any of the preceding claims further **characterised in that** the soil working tool (1) is made of steel.

6. The soil working tool for an agricultural machine, according to any of the preceding claims further **characterised in that** the wear resistant material of the wear-resistant plate (2) is sintered carbide, ceramic material or tool-grade steel.

## Patentansprüche

1. Bodenbearbeitungsgerät für eine landwirtschaftliche Maschine mit einem Verschleißschutz gegen Überverschleiß in Form von mindestens zwei verschleißfesten Platten (2), wobei mindestens eine verschleißfeste Platte (2) so geformt und anbringbar ist, dass ihr Profil in Bewegungsrichtung des Bodenbearbeitungsgerätes (1) die Vorderkante (5) der nächstfolgenden verschleißfesten Platte (2,8) überdeckt, während sie in Kontakt mit dem Boden ist, **dadurch gekennzeichnet, dass** die genannte nächstgelegene verschleißfeste Platte (2,8) durch eine Klebstoffschicht befestigt ist und die erste verschleißfeste Platte (2,7), die an der Spitze des Bodenbearbeitungswerkzeugs (1) angeordnet ist, durch Löten befestigt ist.

2. Bodenbearbeitungsgerät für eine landwirtschaftliche Maschine mit einem Verschleißschutz gegen Überverschleiß in Form von mindestens zwei verschleißfesten Platten (2), wobei mindestens eine verschleißfeste Platte (2) so geformt und anbringbar ist, dass ihr Profil in Bewegungsrichtung des Bodenbearbeitungsgerätes (1) über die Vorderkante (5) der nächstgelegenen verschleißfesten Platte (2,8) hinausragt, während sie in Kontakt mit dem Boden ist, **dadurch gekennzeichnet, dass** die genannte nächstgelegene verschleißfeste Platte (2,8) durch eine Klebstoffschicht befestigt ist und die erste verschleißfeste Platte (2,7), die an der Spitze des Bodenbearbeitungswerkzeugs (1) angeordnet ist, durch Löten befestigt ist.

3. Bodenbearbeitungsgerät für eine landwirtschaftliche Maschine nach einem der vorhergehenden Ansprüche, **dadurch gekennzeichnet, dass** die letzte verschleißfeste Platte (2,4) so geformt und anbringbar ist, dass ihr Profil in der Bewegungsrichtung des Bodenbearbeitungsgerätes (1) einen Bolzen (6), mit dem das Bodenbearbeitungsgerät (1) an der landwirtschaftlichen Maschine befestigt ist, überdeckt, während es in Kontakt mit dem Boden ist.

4. Bodenbearbeitungsgerät für eine landwirtschaftliche Maschine nach einem der vorhergehenden Ansprüche, **dadurch gekennzeichnet, dass** die verschleißfeste Platte (2) quadratisch oder rechteckig oder trapezförmig oder pfeilförmig oder halbmondförmig ist.

5. Bodenbearbeitungsgerät für eine landwirtschaftliche Maschine nach einem der vorhergehenden Ansprüche, **dadurch gekennzeichnet, dass** das Arbeitswerkzeug (1) aus Stahl hergestellt wird.

6. Bodenbearbeitungsgerät für eine landwirtschaftliche Maschine nach einem der vorhergehenden Ansprüche, **dadurch gekennzeichnet, dass** das verschleißfeste Material der verschleißfesten Platte (2) aus gesintertem Hartmetall, keramischem Material oder Werkzeugstahl besteht.

## Revendications

1. Outil de travail du sol pour une machine agricole comportant une protection contre l'usure excessive sous la forme d'au moins deux plaques résistantes à l'abrasion (2), dans lequel au moins une plaque résistante à l'abrasion (2) est formée et adaptée pour être fixé de telle manière que son profil, dans la direction du mouvement du sol sur l'outil de travail (1), couvre, dans la zone de contact avec le sol, le bord avant (5) de la plaque résistante à l'abrasion (2,8) disposée comme la suivante dans une rangée, **caractérisé en ce que** ladite plaque résistante à l'abrasion (2,8) disposée comme la suivante est fixée par une couche d'adhésif, et la première plaque résistante à l'abrasion (2,7) disposée à l'extrémité de l'outil de travail du sol (1) est fixée par brasage.

2. Outil de travail du sol pour une machine agricole comportant une protection contre l'usure excessive sous la forme d'au moins deux plaques résistantes à l'abrasion (2), dans lequel au moins une plaque résistante à l'abrasion (2) est formée et adaptée pour être fixé de telle manière que son profil, dans la direction du mouvement du sol sur l'outil de travail (1), chevauche, dans la zone de contact avec le sol, le bord avant (5) de la plaque résistante à l'abrasion (2,8) disposée comme la suivante dans une rangée, **caractérisé en ce que** ladite plaque résistante à l'abrasion (2,8) disposée comme la suivante est fixée par une couche d'adhésif, et la première plaque résistante à l'abrasion (2, 7) disposée à l'extrémité de l'outil de travail du sol (1) est fixée par brasage.

3. Outil de travail du sol pour une machine agricole, selon l'une quelconque des revendications précédentes, **caractérisé en ce que** la dernière plaque résistante à l'abrasion (2,4) est formée et adaptée pour être fixé de telle manière que son profil, dans la direction du mouvement du sol sur l'outil de travail (1), couvre, dans la zone de contact avec le sol, un boulon (6) par lequel l'outil de travail (1) est fixé à la machine agricole.

4. Outil de travail du sol pour une machine agricole, selon l'une quelconque des revendications précédentes, **caractérisé en ce que** la plaque résistant à l'abrasion (2) a la forme d'un carré ou d'un rectangle ou d'un trapèze ou d'une flèche ou d'un demi-lune.

5. Outil de travail du sol pour une machine agricole, selon l'une quelconque des revendications précédentes, **caractérisé en ce que** l'outil de travail (1) est en acier.

6. Outil de travail du sol pour une machine agricole, selon l'une quelconque des revendications précédentes **caractérisé en ce que** le matériau de la plaque résistante à l'abrasion (2) est un carbure fritté, un matériau céramique ou un acier à outils.
